# EUROPEAN PATENT SPECIFICATION

(11) **EP 4 091 778 B1**
(45) Date of publication and mention of the grant of the patent: **28.02.2024**
(21) Application number: 21174904.9
(22) Date of filing: 20.05.2021
(51) Int. Cl.: B25J 15/06, B25J 19/02, B25J 5/00, B25J 9/14, B62D 57/032

(54) **VACUUM CUP FOR A ROBOTIC SYSTEM, ROBOTIC SYSTEM COMPRISING THE VACUUM CUP, AND METHOD FOR PROVIDING A TIGHT HOLD OF THE VACUUM CUP ON UNEVEN SURFACES**
VAKUUMSAUGER FÜR EIN ROBOTERSYSTEM, ROBOTERSYSTEM MIT DEM VAKUUMSAUGER UND VERFAHREN ZUM SICHEREN HALTEN DES VAKUUMSAUGERS AUF UNEBENEN OBERFLÄCHEN
COUPE À VIDE POUR UN SYSTÈME ROBOTIQUE, SYSTÈME ROBOTIQUE COMPRENANT LA COUPE À VIDE, ET PROCÉDÉ POUR ASSURER UNE PRISE SERRÉE DE LA COUPE À VIDE SUR DES SURFACES INÉGALES

(43) Date of publication of application: 23.11.2022
(73) Proprietor: Scuola universitaria professionale della Svizzera italiana (SUPSI), 6928 Manno (CH)
(72) Inventor: Gitardi, Diego, 6855 San Pietro di Stabio (CH); Sabbadini, Simone, 6565 San Bernardino (CH); Valente, Anna, 6984 Pura (CH)
(74) Representative: Modiano, Gabriella Diana

(56) References cited:
- US-A- 4 669 915
- US-A1- 2020 048 015
- US-B1- 10 357 883
- US-B1- 10 843 348

## Description

The present invention relates to a vacuum cup that is suitable for mounting on a robotic system. The invention further relates to a robotic system, such as a mobile robot, a robotic platform or a robotic arm, comprising the vacuum cup, and to a method for providing a tight hold of the vacuum cup on uneven surfaces.

In the last 10 years or so, the robotic industry has recognized autonomous robots and mobile robotic systems as potential market segments that could expand robotics technologies into new sectors, such as maintenance operations in the most wide-ranging of fields.

These fields include, for example, offshore and onshore applications.

In such context, many robotic platforms have been designed and developed in order to meet the various different industrial needs.

One of the current critical challenges is related to the development of robots and robotic platforms that are able to walk on inclined or overhanging surfaces, or to climb vertical surfaces that are characterized by irregular, curved or flat shapes, such as wall or ceiling surfaces made of different materials comprising, but not limited to, ferrous and non-ferrous materials.

The resolution of this technical problem represents a key element for the diffusion of efficient use of robotic platforms in new, high-impact industrial sectors.

The means that enable robots and robotic platforms to "walk" or move on surfaces and/or to grip gripping surfaces are generally constituted by vacuum grippers provided as vacuum cups.

Such vacuum cups, which should effectively provide sufficient gripping force to either safely keep the robot or robotic platform on the surface on which it moves or to allow handling of objects that are gripped by the vacuum cup, are designed to be mounted on articulated legs or arms of robots and robotic platforms.

The vacuum cups are fed with working fluids, such as air, directly by the robot or robotic platform on which they are provided.

The use of the presently known vacuum suction cups generally limits the application of climbing/moving robots to operate predominantly on smooth surfaces only.

Indeed, in the present market, it is possible to find vacuum cups of a wide variety of shapes and sizes which are made of materials with different properties. However, most of them, if not all, are designed to allow a grip on and over surfaces that are characterized by flat and regular surfaces with low roughness.

The documents US2020/048015A1, US10843348B1, US4669915A and US10357883B1 form part of the prior art.

The operating conditions of the current commercial solutions are not assured (sometimes expressly not recommended) when it is necessary to use the vacuum to grip objects with curved, rugged or uneven surfaces. In such applications, a sealing element of a vacuum cup is not able to guarantee the correct surface contact between the cup and the surface to be gripped. Lack of a proper, continuously sealing grip, in fact, results in the infiltration of air inside the cup, which makes it difficult to achieve efficient vacuum generation.

As a result of such technical problem, there is a need for highly efficient commercial cups that can also be easily adaptable to existing robots or robotic platforms.

The design of such vacuum cups should desirably be driven by the need to provide a compact and lightweight structure and to provide, at the same time, a high vacuum strength-to-mass ratio for any robot or robotic platform on which it is mounted.

The structure of the vacuum cups will need to incorporate all the mechanics and feeding connections necessary to advantageously make the cup easily and efficiently attachable with the most widely-varying robots and robotic platforms available. At the same time the cups should aim for high levels of performance so as to represent a potential solution in order to overcome the current limitations related to robotic applications in new industrial sectors.

An object of the invention is therefore to provide a vacuum cup for a robotic system that overcomes the current limitations of the existing vacuum cup solutions, in so doing expanding its use in various fields, and in particular a vacuum cup that is highly effective in fields where sufficient gripping force is required either to safely keep the robot or robotic platform moving on an uneven, rugged or curved surface or to allow an efficient grip on uneven, rugged or curved surfaces of objects that are to be handled.

Another object of the present invention is to provide a highly effective vacuum cup which is designed to be easily mountable on articulated legs or arms of robots and robotic platforms that already exist on the market, such mounting not requiring structural modifications in order to feed the vacuum cup with working fluids, such as air, directly from the robot or robotic platform on which it is mounted.

Another object of the present invention is to provide a highly effective vacuum cup for a vacuum gripper with a compact, lightweight structure that provides, at the same time, a sufficiently high vacuum strength-to-weight ratio with respect to any robot or robotic platform on which it will be mounted.

A further object of the present invention is to provide a highly effective vacuum cup for a vacuum gripper that can be readily made by using materials and components available on the market so as to limit the costs for its fabrication.

The foregoing needs in the art and the foregoing objects are achieved by a vacuum cup for a robotic system that has the features set forth in claim 1 and by a robotic system, such as a mobile robot, a robotic platform or a robotic arm, as set forth in claim 9, comprising the vacuum gripper provided with a vacuum cup according to claim 1.

All of the above is also achieved by the method set forth in claim 13 for providing a tight hold on uneven surfaces of the vacuum cup according to claim 1, mounted on a robotic system according to claim 9.

In a preferred embodiment, a vacuum cup for a robotic system is provided that comprises an interface element configured for interfacing with a robotic system, a tilting element, a floating element defining an inner chamber of the vacuum cup, an aspiration duct provided at the interface element to connect the inner chamber to a vacuum system for generating, inside the inner chamber, a vacuum suitable for gripping of the cup on a gripping surface, and a tilting joint.

The tilting element is connected to the interface element by way of the tilting joint whereby the tilting element is tiltable with respect to the interface element.

An intermediate element is also provided which is fixed to the tilting element, the intermediate element further being sealably connected via a sliding fit connection to the floating element.

At least one sliding connector, connecting together said tilting element and the floating element, is further provided and is mounted with the tilting element and the floating element so as to be jointly tiltable with respect to the interface element for the adaptable positioning thereof with respect to a gripping surface.

A pressure chamber is provided in a bottom seat of the floating element, and can be connected to pressure regulation means suitable to control its internal pressure. The pressure chamber has an active side and is deformable upon the action thereon of forces that are internal and/or external thereto, the internal and/or external forces being generated by the combined action of vacuum suction on a gripping surface determined by the vacuum inside the inner chamber and of pressure variation inside the pressure chamber.

A sealing element is arranged, bearing with a bearing side thereof on the active side of the pressure chamber and having a sealing side, opposite to the bearing side, said sealing side being for sealing on a gripping surface.

In a variant, the interface element and/or the tilting element and/or the floating element are each constituted by a respective flange.

According to an aspect of the invention, the at least one sliding connector is mounted between the tilting and floating elements so as to be slideable with respect to the former and fixed to the latter, with an elastic thrust element interposed.

The floating element may be elastically urged, with respect to the tilting element, in order to counteract any lack of sealing on the active side of the sealing element, such as owing to the unevenness and ruggedness of the contact surface on which the vacuum cup acts.

In a variant, the pressure chamber is made of a flexible material, such as elastomer or rubber. Also in a variant, the sealing element is made of a flexible material, such as elastomer or rubber.

In a useful embodiment, the intermediate element is an annular block connected via a sliding fit connection to the floating element, at an end thereof opposite the end where the bottom seat is provided, and sealably inserted at an end surface of the inner chamber so as to form a slide guide for guiding the sliding of the intermediate element in the floating element.

Another aspect of the invention is that the tilting element can comprise a bush protruding therefrom and connected to the aspiration duct provided at the interface element. In a variant, the bush has, fixed thereon, an external spherical element tiltably accommodated inside a seat element provided fixed on an inner face of said interface element.

The seat element has a cavity with an inner spherical surface shaped to snugly accommodate the external spherical element.

In an aspect of the invention, the bottom seat of the floating element is provided with a valve connection element for connecting the pressure chamber to the pressure regulation means.

The invention also provides a robotic system, such as a mobile robot, a robotic platform or a robotic arm that comprises a vacuum gripper provided with a vacuum cup, a vacuum system and pressure regulation means configured to control the pressure inside the pressure chamber and the vacuum level in the inner chamber of the vacuum cup in order to determine the deformation of the pressure chamber upon the action thereon of internal and/or external forces. The internal and/or external forces can be generated by the combined action of vacuum suction on a gripping surface determined by the vacuum inside the inner chamber and of pressure variation inside the pressure chamber, said combined action urging the sealing element, together with the active side of the pressure chamber, to sealably adapt its sealing side in every part thereof to even and/or uneven areas of a gripping surface.

According to the invention, a method for providing a tight hold on uneven surfaces of a vacuum gripper provided with a vacuum cup mounted on a robotic system, comprises: (a) controlling the pressure inside the inner chamber and the pressure chamber of the vacuum cup, (b) varying the vacuum pressure in the inner chamber in order to achieve a vacuum pressure level suitable to provide a suction force of the vacuum cup for keeping a tight hold on the even and/or uneven areas of the gripping surface, and concurrently (c) varying the internal pressure in the pressure chamber in order to urge, with its active side, the sealing element to sealably adapt its sealing side, in every part thereof, to even and/or uneven areas of a gripping surface which the vacuum cup contacts. The steps (a)-(c) are reiterated at least every time a gripping surface changes.

### BRIEF DESCRIPTION OF THE DRAWINGS

The vacuum cup that is suitable for mounting on a robotic system and the robotic system, such as a mobile robot, a robotic platform or a robotic arm, comprising the vacuum gripper provided with the vacuum cup forming the present invention, will now be described, by way of example only, in the accompanying drawings, in which:
Fig. 1 is a cross-sectional perspective view of a vacuum cup according to the present invention;
Figs. 2A-2C are schematic cross-sectional views of a detail of the vacuum cup shown in Fig. 1 illustrating, in three subsequent steps, the operation of the floating flange and seal element on a gripping surface;

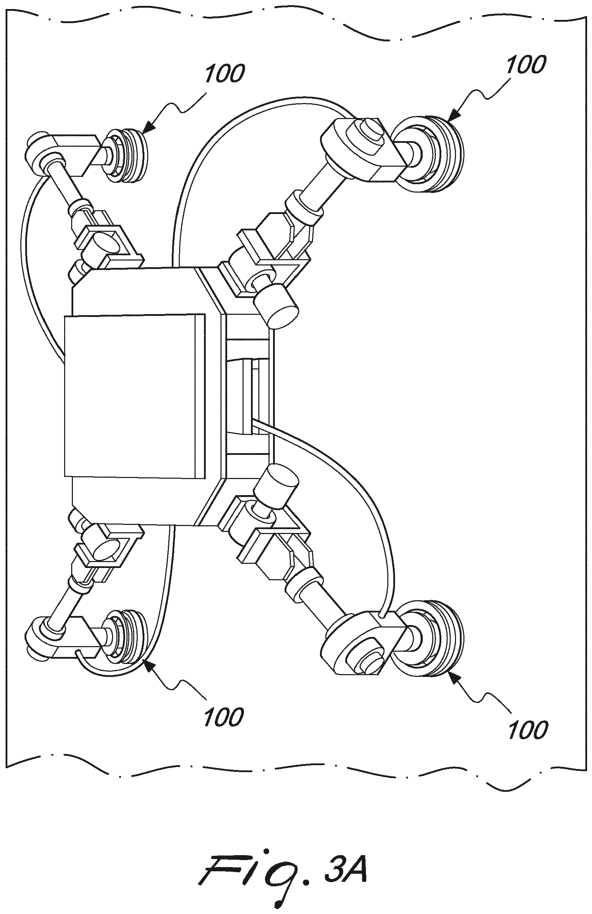

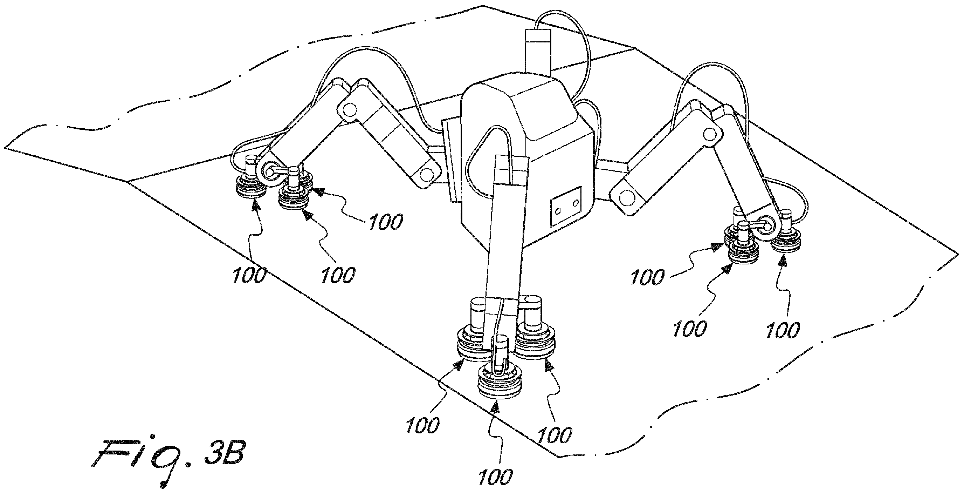

Figs. 3A-3C are schematic perspective views showing various robots, provided with the vacuum cup according to the invention, in the gripping position on vertical or substantially horizontal gripping surfaces that have uneven or curved areas;
Fig. 4A is a schematic, partially cross-sectional view of a Venturi pump device, according to the invention;
Fig. 4B is a schematic, partially cross-sectional view of the floating element with the pressure chamber and the sealing element, the floating element being connected to a Venturi pump device according to the invention;
Fig. 5 is a schematic, partially cross-sectional view of the floating element with the pressure chamber and the sealing element, the pressure chamber being connected to pressure regulation means, according to the invention.

### DETAILED DESCRIPTION OF THE INVENTION

A preferred but not exclusive embodiment of a vacuum cup (100) for a robotic system and a robotic system, such as a mobile robot, a robotic platform or a robotic arm, the robotic system comprising the vacuum gripper provided with a vacuum cup (100), are hereinafter disclosed with reference to the Figures.

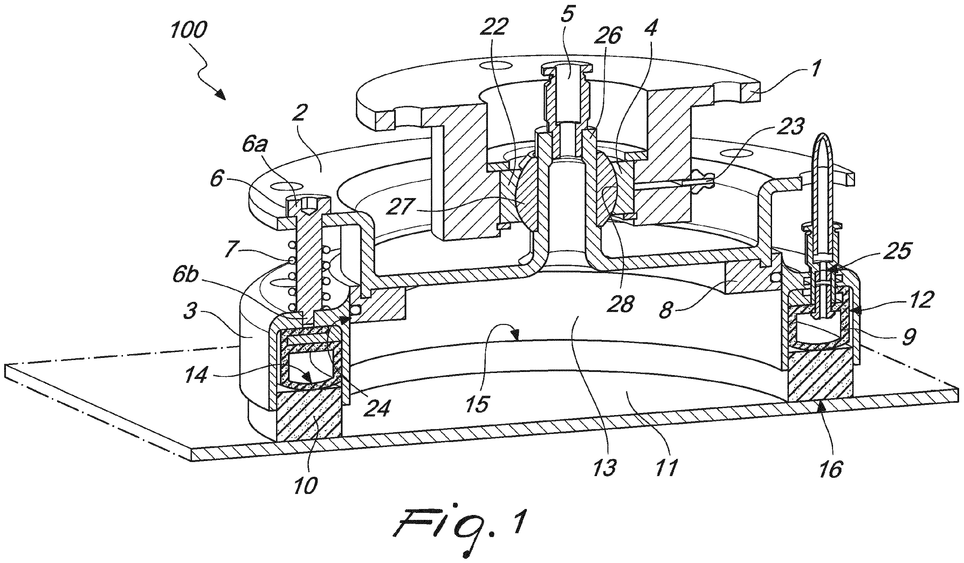

With reference to Figure 1, the vacuum cup 100 comprises an interface element 1, configured for interfacing with a robotic system.

The vacuum cup further comprises a tilting element 2, a floating element 3 that defines an inner chamber 13 of the vacuum cup 100, an aspiration duct 5, provided at the interface element 1 in order to connect said inner chamber 13 to a vacuum system for generating, inside the inner chamber 13, a vacuum suitable for gripping the cup on a gripping surface 11, and a tilting joint 4.

The tilting element 2 is connected to the interface element 1 by way of the tilting joint 4. The tilting element 2 is therefore tiltable with respect to the interface element 1.

An intermediate element 8 is also provided fixed to the tilting element 2 and is sealably connected via a sliding fit connection to the floating element 3.

The intermediate element 8 can be provided, for example, as an annular block connected via a sliding fit connection to the floating element 3. The annular block is sealingly inserted at an end surface of the inner chamber 13, opposite to the end where the bottom seat 12 is provided, so as to form a slide guide 24. The slide guide is for guiding the sliding of the intermediate element 8 in the floating element 3.

As illustrated in Fig. 1, a sealing gasket can be further provided, for example, on the side of the intermediate element 8 that engages the surface of the inner chamber 13.

The floating element 3 has, at an end thereof, a bottom seat 12 with an open face.

At least one sliding connector 6 for connecting together the tilting element 2 and the floating element 3 is provided.

In different embodiments, two, three or more sliding connectors 6 can be provided, suitably arranged, for example symmetrically, around a peripheral area of the tilting element 2 overhanging a peripheral area of the floating element 3, so as to connect the tilting element 2 and the floating element 3 together.

The at least one sliding connector 6 is mounted between said tilting 2 and floating 3 elements, and is slideable with respect to the former and fixed to the latter, with an elastic thrust element 7 interposed.

In a possible but not exclusive embodiment the sliding connector 6 can be a bolt having a head 6a and an opposite fixing end 6b, for example threaded.

The sliding connector 6 is slideably inserted through a hole, provided in the peripheral area of the tilting element 2, and threaded with its end 6b into a corresponding threaded hole provided in the peripheral area of the floating element 3 located below the overhanging peripheral area of the tilting element 2.

The tilting element 2 and the floating element 3 are jointly tiltable with respect to the interface element 1 for the adaptable positioning thereof with respect to a gripping surface 11.

A pressure chamber 9 is provided arranged in the bottom seat 12 of the floating element 3) and can be connected to pressure regulation means 20 that are suitable to control the internal pressure thereof.

The pressure chamber 9 has an active side 14, and is deformable upon the action thereon of forces that are internal and/or external thereto. The internal and/or external forces are generated by the combined action of the vacuum suction on a gripping surface 11 determined by the vacuum inside the inner chamber 13 and of the pressure variation inside the pressure chamber 9.

A sealing element 10 is provided, bearing with a bearing side 15 thereof on the active side 14 of the pressure chamber 9 that has a sealing side 16, opposite to the bearing side 15, the sealing side 16 being for sealing on a gripping surface.

The sealing element 10 is made of a suitably flexible material, such as elastomer or rubber.

In an advantageous, but not exclusive, embodiment, the tilting element 2 can comprise a bush 26 that protrudes from it and is connected to the aspiration duct 5 provided at the interface element 1.

The bush 26 has, fixed thereon, an external spherical element 27 that is tiltably accommodated inside a seat element 22 provided fixed on an inner face of the interface element 1.

The seat element 22 has a cavity 28 with an inner spherical surface that is shaped to snugly accommodate the external spherical element 27.

A lubricator 23, for example, can be provided on the interface element 1 to allow the feeding through it of a suitable lubricant of a known kind.

The tilting element 2 is adapted, under a pushing force of the interfacing element 1, connected to a robotic leg or arm, to exert a force that is such as to apply the floating element 3 with the sealing element 10 onto a gripping surface 11.

The floating element 3 elastically urged by the elastic thrust element 7, with respect to the tilting element 2, is so enabled by virtue of the thrust of the elastic element 7 to counteract any lack of sealing between the active side 14 of the sealing element 10 such as for example owing to the unevenness and ruggedness of the contact surface 11 on which the vacuum cup 100 acts.

This provides a further, self-adjusting sealing action, in addition to the mentioned combined action of the vacuum suction on the gripping surface 11 determined by the vacuum inside the inner chamber 13 and of the pressure variation inside the pressure chamber 9.

The elastic thrust element 7 can be, in various different embodiments, a helical spring, an elastic bush, an air spring or other suitable, known elastic thrust device.

In various alternative embodiments, the interface element 1, the tilting element 2 and the floating element 3 are each constituted by a respective flange.

The flanges can be made, for example, of lightweight metallic materials, such as aluminum, titanium or suitable alloys. In addition, non-metallic, high-grade materials, known to have high mechanical strength and resistance to wear, such as synthetic, composite and/or sintered materials, can also be used.

The pressure chamber 9 can be made of a flexible material, such as elastomer or rubber. Advantageously, it is provided as a continuous, closed loop chamber.

The chamber has, in cross-section, for example, a circular, elliptical, or rectangular shape, or any other shape that, as illustrated in Figures 1, 2A-2C, 4B and 5, is possibly adaptable, upon pressurization, to the shape of the bottom seat 12 and to a configuration of a gripping surface 11 on which the sealing element 10 bears.

A valve connection element 25, of a known kind, for connecting the pressure chamber 9 to the pressure regulation means 20, is provided protruding inside the bottom seat 12 of the floating element 3. The valve connection element 25 is designed so as to be connectable to gas or air feeding means.

Suitable variation of the pressure inside the pressure chamber 9, in combination with the pressing force exerted on it by the sealing element 10 under the effect of the vacuum suction on the gripping surface 11, causes a deformation of the pressure chamber itself.

This deformation, once the chamber 9 matches the shape of the bottom seat 12 of the floating element 3, will further force the active side 14 of the pressure chamber 9, and correspondingly the sealing side 16 of the sealing element 10, to adapt to a specific configuration of the gripping surface 11 on which the vacuum cup 100 bears.

Once the specific configuration is achieved, the active side 14 remains in a controlled condition of temporary rigidity in order to effectively maintain the sealing configuration of the sealing element 10 onto the gripping surface 11.

When the position of the vacuum cup 100 on the gripping surface 11 changes, the configuration of the active side 14 of the pressure chamber 9 can change and the chamber again achieves, in the new configuration, the rigidity suitable to effectively maintain the sealing configuration of the sealing element 10 on the new gripping surface 11.

Thus, combined control of the internal pressure of the pressure chamber 9 and of the vacuum pressure level inside the inner chamber 13 of the floating element 3 allows the exertion of a uniform load onto the sealing element 10 and, correspondingly, onto the gripping surface 11, for any configuration such surface can have.

The pressure chamber 9, according to the invention, is therefore capable of deforming to various forms, which affords it a variable rigidity in multiple sealing configurations.

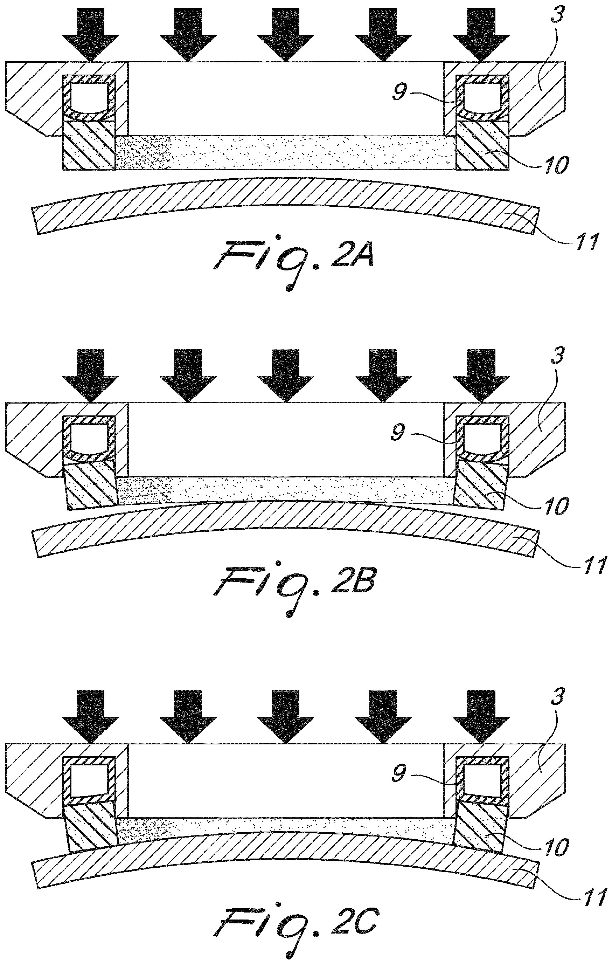

Figs. 2A-2C schematically illustrate three successive configurations leading to the deformation of the pressure chamber 9 and sealing element 10 during a stepping of the vacuum cup 100, under a load exerted by the tilting flange 2, on a gripping surface 11 and up until a tight adhesion position on such surface.

A robotic system, such as a mobile robot, a robotic platform or a robotic arm, that is provided with a vacuum cup 100 according to an embodiment of the invention, comprises the vacuum system and the pressure regulation means 20 configured to control the pressure inside the pressure chamber 9 and the vacuum pressure level in the inner chamber 13 of the vacuum cup 100.

The pressure control is suitable to determine a deformation of the pressure chamber 9 upon the action thereon of internal and/or external forces generated by the combined action of the vacuum suction on the gripping surface 11 determined by the vacuum pressure inside the inner chamber 13 and of the pressure variation inside the pressure chamber 9. Such combined action urges the sealing element 10, by way of the active side 14 of the pressure chamber 9, to sealingly adapt every part of the sealing side 16 to fit both even and uneven areas of the gripping surface 11.

The vacuum system can be configured according to various embodiments.

For example it can comprise, in an embodiment, a vacuum pump of a known kind or, in a different embodiment, a Venturi pump device 17.

The vacuum system, in any of its configurations, is connected to the pressure regulation means 20 and to the aspiration duct 5 of the vacuum cup 100.

The pressure regulation means 20 can be constituted, in a known manner, by a valve system that is controllably actuatable in order to control the pressure of the air or gas provided by a compressed air or gas source 31 to the pressure chamber 9 and to the vacuum system.

The Venturi pump device is of a known kind and is provided, for example, with a Venturi duct element 17 through which pressurized air is supplied, in a known manner, between its inlet 18 and its outlet 19, through a choked section that creates a depression that generates a vacuum. The Venturi duct element 17 is connected, at its vacuum depression side, to the aspiration duct 5.

In a preferred, but not exclusive, embodiment, the pressure regulation means 21 comprise a controller 21 of a known kind, which is configured to control the variation of the internal pressure in the pressure chamber 9 to suitably urge, with its active side 14, the sealing element 10 to sealingily adapt every part of its sealing side 16 to match even and uneven areas of a contact surface 11.

Concurrently, the variation of the internal pressure in the inner chamber 13 is controlled in order to achieve a vacuum pressure level suitable to provide a suction force of the vacuum cup 100 for keeping a tight grip on any even and/or uneven area of the gripping surface 11.

The controller 21 is interfaced, in a known manner, with sensor means, of a known kind, which are adapted to detect respective pressure values in the inner chamber 13 and in the pressure chamber 9 of the vacuum cup 100.

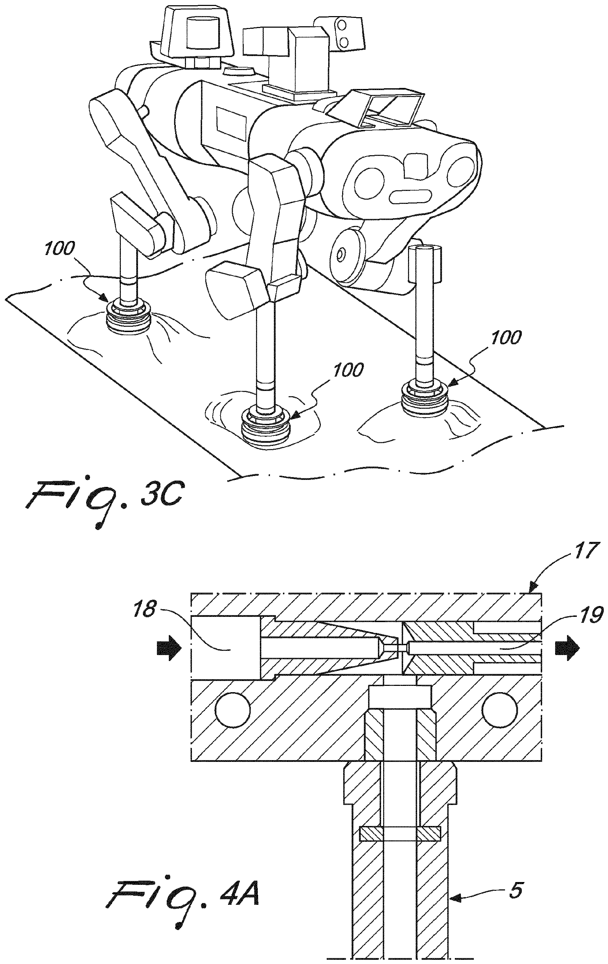

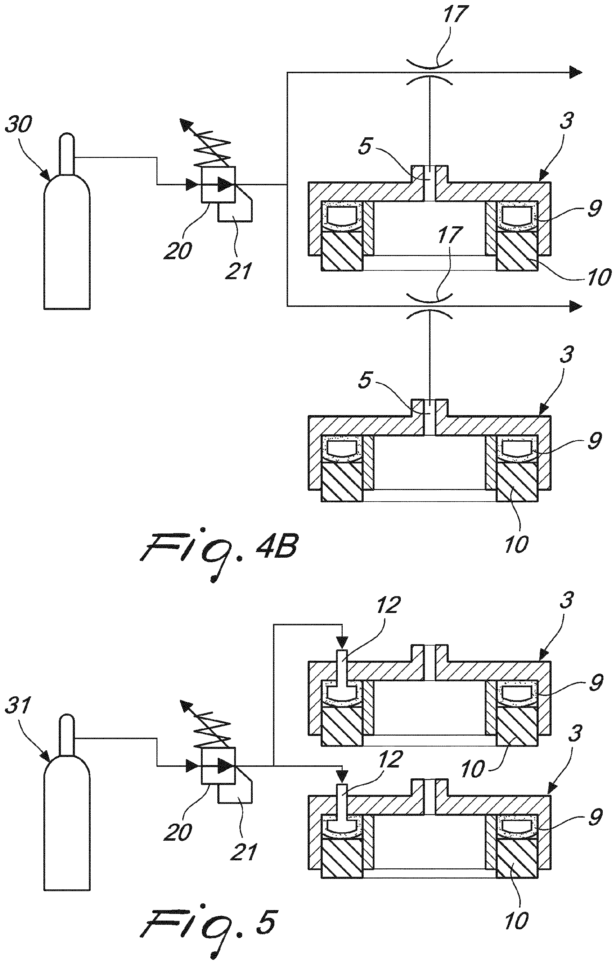

The pressure regulation means 20, the controller 21 and the gas or air source 31 are represented in Figs. 4A-4B and 5 by way of schematic illustration only in order to show their functional arrangement within the pressure control system of the vacuum cup 100.

In a preferred, but not exclusive, embodiment, the controller, the pressure regulation means and the air source can advantageously be provided on a robot or robotic platform on which the vacuum cup 100 is to be provided.

The above described systems and devices are suitable for use in a method for providing a tight hold of the vacuum gripper provided with the vacuum cup 100 on uneven surfaces.

The method comprises controlling the pressure variation inside the inner chamber 13 and the pressure chamber 9 of the vacuum cup 100; varying the vacuum pressure in the inner chamber 13 in order to achieve a vacuum pressure level that is suitable to provide a suction force of the vacuum cup 100 for keeping a tight grip on the even and/or uneven areas of the gripping surface 11; and concurrently varying the internal pressure in the pressure chamber 9 in order to urge the sealing element 10, with its active side 14, to sealably adapt its sealing side 16, in every part thereof, to even and/or uneven areas of a gripping surface 11 which the vacuum cup 100 contacts.

The steps above are suitably reiterated at least every time a gripping surface changes.

The control step is achieved by way of the controller 21 which is interfaced with the sensor means provided at the inner chamber 13 and the pressure chamber 9, respectively.

The pressure variation step of the internal pressure in the pressure chamber 9 and the pressure variation step of the vacuum pressure in the inner chamber 13 are achieved by way of pressure regulation means 20 of the robotic system.

The vacuum cup, according to the invention, has high accuracy in operation which results from the synergy of a highly accurate mechanical design and an embedded monitoring and controlling system.

The foregoing description of the preferred embodiments of the invention has been presented to illustrate the principles of the invention and not to limit the invention to the particular embodiment/embodiments illustrated. It is intended that the scope of the invention be defined by all of the embodiments and their equivalents encompassed within the scope of the following claims.

## Claims

1. A vacuum cup for a robotic system, comprising:
- an interface element (1) configured for interfacing with a robotic system;
- a tilting element (2);
- a floating element (3) forming an inner chamber (13) of the vacuum cup (100);
- an aspiration duct (5), provided at said interface element (1) to connect said inner chamber (13) to a vacuum system (17, 20) for generating, inside said inner chamber (13), a vacuum suitable for grip of the cup on a gripping surface (11);
- a tilting joint (4), the tilting element (2) being connected to said interface element (1) by way of said tilting joint (4) whereby said tilting element (2) is tiltable with respect to said interface element (1);
- an intermediate element (8) fixed to said tilting element (2), the intermediate element (8) being sealingly connected via a sliding fit connection to the floating element (3);
- at least one sliding connector (6) for connecting said tilting element (2) and said floating element (3) together, said tilting element (2) and said floating element (3) being jointly tiltable with respect to said interface element (1) for adaptable positioning thereof with respect to a gripping surface (11);
- a pressure chamber (9) provided in a bottom seat (12) of said floating element (3) and being connectable to pressure regulation means (20) suitable to control its internal pressure, the pressure chamber having an active side (14) and being deformable upon action thereon of forces that are internal and/or external thereto, the internal and/or external forces being generated by combined action of vacuum suction on the gripping surface (11) determined by the vacuum inside the inner chamber (13) and of pressure variation inside the pressure chamber (9);
- a sealing element (10), bearing with a bearing side (15) thereof on said active side (14) of the pressure chamber (9) and having a sealing side (16), opposite to said bearing side (15), the sealing side (16) being for sealing on the gripping surface (11).

2. The vacuum cup according to claim 1, wherein one or more of the interface element (1), the tilting element (2) and the floating element (3) are each constituted by a respective flange.

3. The vacuum cup according to claim 1 or 2, wherein said at least one sliding connector (6) is mounted between said tilting and floating elements (2, 3), is slideable with respect to the former and fixed to the latter, with an elastic thrust element (7) interposed, whereby said floating element (3) is elastically urged, with respect to the tilting element (2), to counteract any lack of sealing at the sealing side (16) of the sealing element (10) such as owing to the unevenness and ruggedness of the gripping surface (11) on which the vacuum cup (100) acts.

4. The vacuum cup according to any of claims 1 to 3, wherein said pressure chamber (9) is made of a flexible material, such as elastomer or rubber.

5. The vacuum cup according to any of claims 1 to 4, wherein said sealing element (10) is made of a flexible material, such as elastomer or rubber.

6. The vacuum cup according to any of the preceding claims, wherein said intermediate element (8) is an annular block connected via sliding fit connection to the floating element (3), the annular block being sealingly inserted at an end surface of said inner chamber (13) opposite to the end where said bottom seat (12) is provided, to form a slide guide (24) for guiding sliding of said intermediate element (8) in said floating element (3).

7. The vacuum cup according to any of the preceding claims, wherein said tilting element (2) comprises a bush (26) protruding therefrom and connected to said aspiration duct (5) provided at the interface element (1), said bush (26) having, fixed thereon, an external spherical element (27) tiltably accommodated inside a seat element (22) provided fixed on an inner face of said interface element (1), said seat element (22) having a cavity (28) with an inner spherical surface shaped to snugly accommodate said external spherical element (27).

8. The vacuum cup according to any of the preceding claims, wherein said bottom seat (12) of said floating element (3) is provided with a valve connection element (25) for connecting said pressure chamber (9) to said pressure regulation means (20).

9. A robotic system, such as a mobile robot, a robotic platform or a robotic arm, comprising:
- a vacuum cup (100) according to any of claims 1-8,
- a vacuum system (17, 20), and
- pressure regulation means (20) configured to control pressure inside the pressure chamber (9) and vacuum level inside the inner chamber (13) of the vacuum cup (100) to determine deformation of said pressure chamber (9) upon action thereon of internal and/or external forces generated by combined action of vacuum suction on a gripping surface (11) determined by the vacuum inside the inner chamber (13) and of pressure variation inside the pressure chamber (9), said combined action urging said sealing element (10), with said active side (14) of the pressure chamber, to sealingly adapt its sealing side (16) in every part thereof to even and/or uneven areas of a gripping surface (11).

10. The robotic system of claim 9, wherein said vacuum system (17, 20) comprises a vacuum pump or a Venturi pump device (17) connected to the pressure regulation means (20) and to the aspiration duct (5) of the vacuum cup (100).

11. The robotic system of any of claims 9-10, wherein said pressure regulation means (21) comprise a controller (21) configured to:
- control variation of internal pressure in the pressure chamber (9) to urge, with the active side (14) thereof, the sealing element (10) to sealingly adapt its sealing side (16) in every part thereof to even and/or uneven areas of a contact surface (11) and, concurrently,
- control variation of internal pressure in the inner chamber (13) to achieve a vacuum pressure level suitable to provide a suction force of the vacuum cup (100) for keeping a tight grip on the even and/or uneven areas of the gripping surface (11).

12. The robotic system of claim 11, wherein said controller (21) is interfaced with sensor means provided at the inner chamber (13) and the pressure chamber (9) of the vacuum cup (100) for detecting respective pressure values.

13. A method for providing a tight hold on uneven surfaces of a vacuum cup (100) according to any of the claims 1-8 and mounted on a robotic system according to any of claims 9-12, the method comprising:
(a) controlling pressure inside the inner chamber (13) and the pressure chamber (9) of the vacuum cup (100);
(b) varying vacuum pressure in the inner chamber (13) to achieve a vacuum pressure level suitable to provide a suction force of the vacuum cup (100) for keeping a tight hold on the even and/or uneven areas of the gripping surface (11); and concurrently
(c) varying the internal pressure in the pressure chamber (9) to urge, with the active side (14) thereof, the sealing element (10) to sealingly adapt its sealing side (16), in every part thereof, to even and/or uneven areas of a gripping surface (11) which the vacuum cup (100) contacts;
wherein steps (a)-(c) are reiterated at least every time a gripping surface changes.

14. The method of claim 13, wherein the control step (a) is achieved by way of a controller (21) interfaced with sensor means provided at the inner chamber (13) and the pressure chamber (9), respectively, of the vacuum cup (100).

15. The method of claim 13 or 14, wherein the pressure variation step (b) of the internal pressure in the pressure chamber (9) and the pressure variation step (c) of the vacuum pressure in the inner chamber (13) are achieved by way of pressure regulation means (20) of the robotic system.

## Patentansprüche

1. Ein Vakuumsauger für ein Robotersystem, der Folgendes umfasst:
- ein Schnittstellenelement (1), konfiguriert für den Anschluss an ein Robotersystem;
- ein Kippelement (2);
- ein Schwimmelement (3), das eine innere Kammer (13) des Vakuumsaugers (100) bildet;
- eine Ansaugleitung (5), angebracht an dem Schnittstellenelement (1), um die innere Kammer (13) mit einem Vakuumsystem (17, 20) zu verbinden, um innerhalb der inneren Kammer (13) ein Vakuum zu erzeugen, das für den Halt des Saugers auf einer Greifoberfläche (11) geeignet ist;
- ein Kippgelenk (4), wobei das Kippelement (2) mit dem Schnittstellenelement (1) über das Kippgelenk (4) verbunden ist, wodurch das Kippelement (2) mit Bezug auf das Schnittstellenelement (1) kippbar ist;
- ein intermediäres Element (8), das an dem Kippelement (2) befestigt ist, wobei das intermediäre Element (8) über eine Gleitpassung abdichtend mit dem Schwimmelement (3) verbunden ist;
- mindestens einen Gleitkontakt (6) zum Verbinden des Kippelements (2) und des Schwimmelements (3) miteinander, wobei das Kippelement (2) und das Schwimmelement (3) zur anpassbaren Positionierung davon mit Bezug auf eine Greifoberfläche (11) gemeinsam im Verhältnis zu dem Schnittstellenelement (1) kippbar sind;
- eine Druckkammer (9), angebracht in einem unteren Sitz (12) des Schwimmelements (3) und verbindbar mit Druckreguliermitteln (20), die geeignet sind, ihren Innendruck zu steuern, wobei die Druckkammer eine aktive Seite (14) hat und bei Einwirkung von Kräften darauf, die innerhalb und/oder außerhalb davon sind, verformbar ist; wobei die inneren und/oder äußeren Kräfte erzeugt werden durch die kombinierte Wirkung des Vakuumsaugens auf die Greifoberfläche (11), das vom Vakuum in der inneren Kammer (13) bestimmt wird, und der Druckschwankungen in der Druckkammer (9);
- ein Abdichtelement (10), das mit einer Anliegeseite (15) desselben an der aktiven Seite (14) der Druckkammer (9) anliegt und eine Abdichtseite (16) gegenüber der Anliegeseite (15) hat, wobei die Abdichtseite (16) der Abdichtung an der Greifoberfläche (11) dient.

2. Der Vakuumsauger gemäß Anspruch 1, wobei eines oder mehrere des Schnittstellenelements (1), des Kippelements (2) und des Schwimmelements (3) jeweils aus einem dazugehörigen Flansch bestehen.

3. Der Vakuumsauger gemäß Anspruch 1 oder 2, wobei der mindestens eine Gleitkontakt (6) zwischen dem Kipp- und dem Schwimmelement (2, 3) montiert ist, mit Bezug auf Ersteres verschiebbar und an Letzterem befestigt ist, mit einem dazwischen angeordneten elastischen Schubelement (7), wodurch das Schwimmelement (3) mit Bezug auf das Kippelement (2) elastisch gezwungen wird, eventuell fehlender Abdichtung auf der Abdichtseite (16) des Abdichtelements (10), zum Beispiel aufgrund von Unebenheit und Rauheit der Greifoberfläche (11), auf die der Vakuumsauger (100) einwirkt, entgegenzuwirken.

4. Der Vakuumsauger gemäß einem beliebigen der Ansprüche 1 bis 3, wobei die Druckkammer (9) aus einem biegsamen Material, wie Elastomer oder Gummi, besteht.

5. Der Vakuumsauger gemäß einem beliebigen der Ansprüche 1 bis 4, wobei das Abdichtelement (10) aus einem biegsamen Material, wie Elastomer oder Gummi, besteht.

6. Der Vakuumsauger gemäß einem beliebigen der obigen Ansprüche, wobei das intermediäre Element (8) ein ringförmiger Block ist, der über eine Gleitpassung mit dem Schwimmelement (3) verbunden ist, wobei der ringförmige Block gleitend an einer Endfläche der inneren Kammer (13), gegenüber dem Ende, an welchem der untere Sitz (12) angebracht ist, eingeführt wird, um eine Gleitführung (24) zum Führen des Gleitens des intermediären Elements (8) in dem Schwimmelement (3) zu bilden.

7. Der Vakuumsauger gemäß einem beliebigen der obigen Ansprüche, wobei das Kippelement (2) eine Buchse (26) umfasst, die davon vorsteht und mit der am Schnittstellenelement (1) angebrachten Ansaugleitung (5) verbunden ist, wobei die Buchse (26) ein externes kugelförmiges Element (27) daran befestigt hat, das kippbar in einem Sitzelement (22) untergebracht ist, welches an einer Innenseite des Schnittstellenelements (1) befestigt ist; wobei das Sitzelement (22) einen Hohlraum (28) mit einer inneren kugelförmigen Oberfläche hat, geformt, um das externe kugelförmige Element (27) gut passend aufzunehmen.

8. Der Vakuumsauger gemäß einem beliebigen der obigen Ansprüche, wobei der untere Sitz (12) des Schwimmelements (3) mit einem Ventilanschlusselement (25) zur Verbindung der Druckkammer (9) mit den Druckreguliermitteln (20) ausgestattet ist.

9. Ein Robotersystem, wie zum Beispiel ein mobiler Roboter, eine Roboterplattform oder ein Roboterarm, Folgendes umfassend:
- einen Vakuumsauger (100) gemäß einem beliebigen der Ansprüche 1-8,
- ein Vakuumsystem (17, 20) und
- Druckreguliermittel (20), ausgebildet, um den Druck in der Druckkammer (9) und die Vakuumhöhe in der inneren Kammer (13) des Vakuumsaugers (100) zu steuern, um eine Verformung der Druckkammer (9) bei Einwirkung interner und/oder externer Kräfte darauf zu steuern, die durch die kombinierte Wirkung des Vakuumsaugens auf eine Greifoberfläche (11), das vom Vakuum in der inneren Kammer (13) bestimmt wird, und der Druckschwankungen in der Druckkammer (9) erzeugt werden; wobei die kombinierte Wirkung das Abdichtelement (10), mit der aktiven Seite (14) der Druckkammer, zwingt, seine Abdichtseite (16) in jedem Teil davon abdichtend an ebene und/oder unebene Bereiche einer Greifoberfläche (11) anzupassen.

10. Das Robotersystem gemäß Anspruch 9, wobei das Vakuumsystem (17, 20) eine Vakuumpumpe oder eine Venturi-Pumpenvorrichtung (17) umfasst, die mit den Druckreguliermitteln (20) und der Ansaugleitung (5) des Vakuumsaugers (100) verbunden ist.

11. Das Robotersystem gemäß einem beliebigen der Ansprüche 9-10, wobei die Druckreguliermittel (21) eine Steuerung (21) umfassen, die konfiguriert ist, um:
- die Schwankung des Innendrucks in der Druckkammer (9) zu steuern, um, mit der aktiven Seite (14) davon, das Abdichtelement (10) zu zwingen, seine Abdichtseite (16) abdichtend in jedem Teil davon an ebene und/oder unebene Bereiche einer Greifoberfläche (11) anzupassen, und gleichzeitig
- die Schwankung des Innendrucks in der inneren Kammer (13) zu steuern, um eine Vakuumhöhe zu erreichen, die geeignet ist, eine Saugkraft des Vakuumsaugers (100) bereitzustellen, um einen festen Halt auf den ebenen und/oder unebenen Bereichen der Greifoberfläche (11) aufrechtzuerhalten.

12. Das Robotersystem gemäß Anspruch 11, wobei die Steuerung (21) mit Sensormitteln verbunden ist, die an der inneren Kammer (13) und der Druckkammer (9) des Vakuumsaugers (100) bereitgestellt sind, um entsprechende Druckwerte zu erfassen.

13. Ein Verfahren zum Erzeugen eines festen Halts auf unebenen Oberflächen eines Vakuumsaugers (100) gemäß einem beliebigen der Ansprüche 1-8 und montiert auf einem Robotersystem gemäß einem beliebigen der Ansprüche 9-12, wobei das Verfahren Folgendes umfasst:
(a) das Steuern des Drucks in der inneren Kammer (13) und der Druckkammer (9) des Vakuumsaugers (100);
(b) das Verändern des Unterdrucks in der inneren Kammer (13), um eine Vakuumhöhe zu erzielen, die geeignet ist, eine Saugkraft des Vakuumsaugers (100) zu erzeugen, um einen festen Halt auf den ebenen und/oder unebenen Bereichen der Greifoberfläche (11) aufrechtzuerhalten; und gleichzeitig
(c) das Verändern des Innendrucks in der Druckkammer (9), um, mit der aktiven Seite (14) davon, das Abdichtelement (10) zu zwingen, seine Abdichtseite (16) abdichtend in jedem Teil davon an ebene und/oder unebene Bereiche einer Greifoberfläche (11) anzupassen, mit welcher der Vakuumsauger (100) in Kontakt steht;
wobei die Schritte (a)-(c) mindestens jedes Mal, wenn sich eine Greifoberfläche ändert, wiederholt werden.

14. Das Verfahren gemäß Anspruch 13, worin der Steuerungsschritt (a) durchgeführt wird durch eine Steuerung (21), die mit Sensormitteln verbunden ist, die an der inneren Kammer (13) beziehungsweise der Druckkammer (9) des Vakuumsaugers (100) bereitgestellt sind.

15. Das Verfahren gemäß Anspruch 13 oder 14, worin der Druckänderungsschritt (b) des Innendrucks in der Druckkammer (9) und der Druckänderungsschritt (c) des Unterdrucks in der inneren Kammer (13) durch Druckreguliermittel (20) des Robotersystems durchgeführt werden.

## Revendications

1. Ventouse pour système robotisé, comprenant :
- un élément d'interface (1) configuré pour réaliser une interface avec un système robotisé ;
- un élément d'inclinaison (2) ;
- un élément flottant (3) formant une chambre intérieure (13) de la ventouse (100) ;
- un conduit d'aspiration (5), placé au niveau dudit élément d'interface (1) pour relier ladite chambre intérieure (13) à un système de dépression (17, 20) pour produire, à l'intérieur de ladite chambre intérieure (13), une dépression permettant la préhension de la ventouse sur une surface de préhension (11) ;
- une articulation pivotante (4), l'élément d'inclinaison (2) étant relié audit élément d'interface (1) au moyen de ladite articulation pivotante (4), moyennant quoi ledit élément d'inclinaison (2) peut pivoter par rapport audit élément d'interface (1) ;
- un élément intermédiaire (8) fixé audit élément d'inclinaison (2), l'élément intermédiaire (8) étant relié de manière étanche à l'élément flottant (3) par l'intermédiaire d'une connexion glissante ;
- au moins un connecteur glissant (6) pour relier ledit élément d'inclinaison (2) et ledit élément flottant (3) l'un à l'autre, ledit élément d'inclinaison (2) et ledit élément flottant (3) pouvant être inclinés de façon conjointe par rapport audit élément d'interface (1) pour réaliser un positionnement adaptable de celui-ci par rapport à une surface de préhension (11) ;
- une chambre de pression (9) formée dans un siège inférieur (12) dudit élément flottant (3) et pouvant être reliée à un moyen de régulation de pression (20) adapté pour régler sa pression interne, la chambre de pression ayant un côté actif (14) et étant déformable lorsque des forces qui sont intérieures et/ou extérieures à celle-ci agissent sur elle, les forces intérieures et/ou extérieures étant produites par l'action combinée de l'aspiration sur la surface de préhension (11) déterminée par la dépression à l'intérieur de la chambre intérieure (13) et de la variation de pression à l'intérieur de la chambre de pression (9) ;
- un élément d'étanchéité (10), exerçant un appui avec un côté d'appui (15) de celui-ci sur ledit côté actif (14) de la chambre de pression (9) et ayant un côté d'étanchéité (16), opposé audit côté d'appui (15), le côté d'étanchéité (16) servant à réaliser l'étanchéité sur la surface de préhension (11).

2. Ventouse selon la revendication 1, dans laquelle un ou plusieurs élément(s) parmi l'élément d'interface (1), l'élément d'inclinaison (2) et l'élément flottant (3) sont constitués chacun par une bride respective.

3. Ventouse selon la revendication 1 ou 2, dans laquelle ledit au moins un connecteur glissant (6) est monté entre lesdits éléments d'inclinaison et flottant (2, 3), peut glisser par rapport au premier et est fixe par rapport à ce dernier, avec un élément de butée élastique (7) intercalé, moyennant quoi ledit élément flottant (3) est poussé de manière élastique, par rapport à l'élément d'inclinaison (2), pour compenser tout manque d'étanchéité sur le côté d'étanchéité (16) de l'élément d'étanchéité (10) dû par exemple à l'irrégularité et à la rugosité de la surface de préhension (11) sur laquelle agit la ventouse (100).

4. Ventouse selon l'une quelconque des revendications 1 à 3, dans laquelle ladite chambre de pression (9) est faite d'un matériau flexible, comme un élastomère ou un caoutchouc.

5. Ventouse selon l'une quelconque des revendications 1 à 4, dans laquelle ledit élément d'étanchéité (10) est fait d'un matériau flexible, comme un élastomère ou un caoutchouc.

6. Ventouse selon l'une quelconque des revendications précédentes, dans laquelle ledit élément intermédiaire (8) est un bloc annulaire relié par connexion glissante à l'élément flottant (3), le bloc annulaire étant inséré de manière étanche au niveau d'une surface d'extrémité de ladite chambre intérieure (13) à l'opposé de l'extrémité où est placé ledit siège inférieur (12), pour former une glissière (24) destinée à guider le glissement dudit élément intermédiaire (8) dans ledit élément flottant (3).

7. Ventouse selon l'une quelconque des revendications précédentes, dans laquelle ledit élément d'inclinaison (2) comprend une douille (26) faisant saillie depuis celui-ci et connectée audit conduit d'aspiration (5) placé au niveau de l'élément d'interface (1), ladite douille (26) comportant, fixé sur celle-ci, un élément sphérique extérieur (27) logé de façon inclinable à l'intérieur d'un élément de siège (22) placé de manière fixe sur une face intérieure dudit élément d'interface (1), ledit élément de siège (22) comportant une cavité (28) ayant une surface intérieure sphérique dont la forme est prévue pour recevoir de façon serrée ledit élément sphérique extérieur (27).

8. Ventouse selon l'une quelconque des revendications précédentes, dans laquelle ledit siège inférieur (12) dudit élément flottant (3) est pourvu d'un élément de connexion de vanne (25) pour relier ladite chambre de pression (9) audit moyen de régulation de pression (20).

9. Système robotisé, tel qu'un robot mobile, une plateforme robotisée ou un bras robotisé, comprenant :
- une ventouse (100) selon l'une quelconque des revendications 1 à 8,
- un système de dépression (17, 20), et
- un moyen de régulation de pression (20) configuré pour régler la pression à l'intérieur de la chambre de pression (9) et le niveau de dépression à l'intérieur de la chambre intérieure (13) de la ventouse (100) pour déterminer la déformation de ladite chambre de pression (9) lorsqu'agissent sur elle des forces intérieures et/ou extérieures produites par l'action combinée de l'aspiration sur une surface de préhension (11) déterminée par la dépression à l'intérieur de la chambre intérieure (13) et de la variation de pression à l'intérieur de la chambre de pression (9), ladite action combinée poussant ledit élément d'étanchéité (10), avec ledit côté actif (14) de la chambre de pression, pour adapter de manière étanche son côté d'étanchéité (16) en chaque partie de celui-ci aux régions égales et/ou inégales d'une surface de préhension (11).

10. Système robotisé selon la revendication 9, dans lequel ledit système de dépression (17, 20) comprend une pompe à vide ou un dispositif de pompe de Venturi (17) relié(e) au moyen de régulation de pression (20) et au conduit d'aspiration (5) de la ventouse (100).

11. Système robotisé selon l'une quelconque des revendications 9 à 10, dans lequel ledit moyen de régulation de pression (21) comprend un contrôleur (21) configuré pour :
- commander la variation de pression interne dans la chambre de pression (9) pour pousser, avec le côté actif (14) de celle-ci, l'élément d'étanchéité (10) pour adapter de manière étanche son côté d'étanchéité (16) en chaque partie de celui-ci aux régions égales et/ou inégales d'une surface de contact (11) et, simultanément,
- commander la variation de pression interne dans la chambre intérieure (13) pour atteindre un niveau de dépression approprié pour fournir une force d'aspiration de la ventouse (100) pour maintenir une préhension ferme sur les régions égales et/ou inégales de la surface de préhension (11).

12. Système robotisé selon la revendication 11, dans lequel ledit contrôleur (21) est en interface avec des moyens formant capteurs placés dans la chambre intérieure (13) et la chambre de pression (9) de la ventouse (100) pour détecter des valeurs de pression respectives.

13. Procédé pour fournir une prise ferme sur des surfaces inégales d'une ventouse (100) selon l'une quelconque des revendications 1 à 8 montée sur un système robotisé selon l'une quelconque des revendications 9 à 12, le procédé comprenant les étapes suivantes :
(a) régler la pression à l'intérieur de la chambre intérieure (13) et de la chambre de pression (9) de la ventouse (100) ;
(b) faire varier la dépression dans la chambre intérieure (13) pour atteindre un niveau de dépression approprié pour fournir une force d'aspiration de la ventouse (100) pour maintenir une prise ferme sur les régions égales et/ou inégales de la surface de préhension (11) ; et simultanément
(c) faire varier la pression interne dans la chambre de pression (9) pour pousser, avec le côté actif (14) de celle-ci, l'élément d'étanchéité (10) pour adapter de manière étanche son côté d'étanchéité (16), en chaque partie de celui-ci, aux régions égales et/ou inégales d'une surface de préhension (11) avec laquelle la ventouse (100) est en contact ;
dans lequel les étapes (a) à (c) sont réitérées au moins à chaque fois qu'une surface de préhension change.

14. Procédé selon la revendication 13, dans lequel l'étape de réglage (a) est réalisée au moyen d'un contrôleur (21) en interface avec des moyens formant capteurs placés respectivement dans la chambre intérieure (13) et la chambre de pression (9) de la ventouse (100).

15. Procédé selon la revendication 13 ou 14, dans lequel l'étape de variation de pression (b) de la pression interne dans la chambre de pression (9) et l'étape de variation de pression (c) de la dépression dans la chambre intérieure (13) sont réalisées à l'aide d'un moyen de régulation de pression (20) du système robotisé.
